# EUROPEAN PATENT APPLICATION

(11) **EP 4 450 847 A1**
(43) Date of publication of application: **23.10.2024**
(21) Application number: 23275066.1
(22) Date of filing: 21.04.2023
(51) Int. Cl.: F16F 15/00, G05D 19/02

(54) **VIBRATION CONTROL SYSTEM, VEHICLE, STRUCTURE, AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

According to the present disclosure there is provided a vibration control system for controlling vibration of a structure, the vibration control system comprising: a resonator arrangement for controlling vibration of the structure by absorbing energy therefrom, the resonator arrangement being tunable to tune one or more resonance frequencies of the resonator arrangement; and a controller configured to: determine a frequency response of vibration of the structure; tune the one or more resonance frequencies of the resonator arrangement based on the determined frequency response of vibration of the structure; and control vibration of the structure by operating the tuned resonator arrangement.

## Description

### FIELD

The present invention relates to a vibration control system. The present invention further relates to a vehicle or structure comprising a vibration control system. The present invention further relates to a method of controlling vibration.

### BACKGROUND

The vibrations of heavy machinery, for example engines, during their operation can have an adverse effect on the bodies or structures on which said machinery is mounted. For example, the vibration of an engine mounted in vehicles including aircraft, watercraft and land-going vehicles, can impact vehicle efficiency, accuracy of instrumentation, vehicle noise, and stability.

Vibration control systems are desirable in many settings in order to mitigate the impact of the vibration. Known vibration control systems employ resonator arrangements to control vibration of a structure by absorbing energy therefrom. The tuning of the resonator arrangement may be swept across a frequency band to control frequency responses of vibrations of a structure within said band. However, actual frequency response of vibrations of the structure are not considered during the sweeping of the tuning of the resonator arrangement.

### SUMMARY

According to a first aspect of the present invention, there is provided a vibration control system for controlling vibration of a structure, the vibration control system comprising: a resonator arrangement for controlling vibration of the structure by absorbing energy therefrom, the resonator arrangement being tunable to tune one or more resonance frequencies of the resonator arrangement; and a controller configured to: determine a frequency response of vibration of the structure; tune the one or more resonance frequencies of the resonator arrangement based on the determined frequency response of vibration of the structure; and control vibration of the structure by operating the tuned resonator arrangement.

In one example, the resonator arrangement comprises one or more shunted electromechanical transducers.

In one example, shunt impedances are analogue.

In one example, the controller is configured to: determine the frequency response of vibration of the structure; tune the one or more resonance frequencies of the resonator arrangement to a tuning corresponding to specific frequencies of vibration of the structure; and repeat the preceding steps.

In one example, the controller is configured to: periodically update the tuning of the resonator arrangement.

In one example, the specific frequencies of vibration of the structure frequency of vibration of the structure are frequencies of highest magnitude of vibration of the structure.

In one example, the controller is configured to distribute the resonance frequencies of the resonator arrangement around one or more frequencies of highest magnitude of vibration of the structure.

In one example, the resonator arrangement comprises one or more single degree of freedom actuators.

In one example, the resonator arrangement comprises one or more multiple degree of freedom actuators.

In one example, the resonator arrangement comprises one or more electromechanical actuators.

According to a second aspect of the present invention, there is provided a vehicle or structure comprising the vibration control system according to the first aspect of the present invention.

The second aspect of the present invention may incorporate any or all of the features of the first aspect of the present invention, as desired or as appropriate.

According to a third aspect of the present invention, there is provided a method of controlling vibration of a structure using a resonator arrangement for controlling vibration of the structure by absorbing energy therefrom, the resonator arrangement being tunable to tune one or more resonance frequencies of the resonator arrangement, the method comprising: determining a frequency response of vibration of the structure; tuning one or more resonance frequencies of the resonator arrangement based on the determined frequency response of vibration of the structure; and controlling vibration of the structure by operating the tuned resonator arrangement.

### BRIEF DESCRIPTION OF THE FIGURES

Embodiments of the invention will now be described by way of example only with reference to the figures, in which:
Figure 1 shows a vibration control system;
Figure 2 shows a first example of a vibration control system;
Figure 3 shows a second example of a vibration control system;
Figure 4 shows a third example of a vibration control system;
Figure 5 shows a fourth example of a vibration control system;
Figure 6 shows plots of attenuation in kinetic energy using different vibration control approaches;
Figure 7 shows a vehicle comprising a vibration control system;
Figure 8 shows a structure comprising a vibration control system; and
Figure 9 shows general methodology principles.

### DETAILED DESCRIPTION

A vibration control system is described herein. An important feature of the present invention is that a resonator arrangement is tuned based on a determined frequency response of vibration of a structure. This may be known as an "adaptive tuning" approach, where the tuning is adapted based on the determined frequency response of vibration of the structure. A key benefit of the present approach is the ability to adapt to the modal frequencies of the structure. Vibration of the structure may result in a frequency response, or profile, having one or more peak frequencies which it is desired to control. Prior art approaches seek to sweep tuning of a resonator arrangement without considering the frequency response of vibration of the structure to be controlled. That is, prior art approaches do not incorporate adaptive tuning. Further detail will be provided herein.

For avoidance of doubt, the frequency response of vibration of the structure is an investigation of the vibration of the structure in the frequency domain. This enables the determination of frequency components which are prominent, or dominant, in the vibration of the structure. These frequency components may be related to fundamental movements of the structure, which may relate to the nature of the structure (e.g., its constituent parts or arrangement of parts). In the present invention, the tuning is based on the determined frequency response of vibration of the structure. Furthermore, tuning may be switched (e.g., abruptly, or discontinuously, changed) to control different frequencies of vibration, rather than swept (e.g., continuously changed) as in prior art approaches.

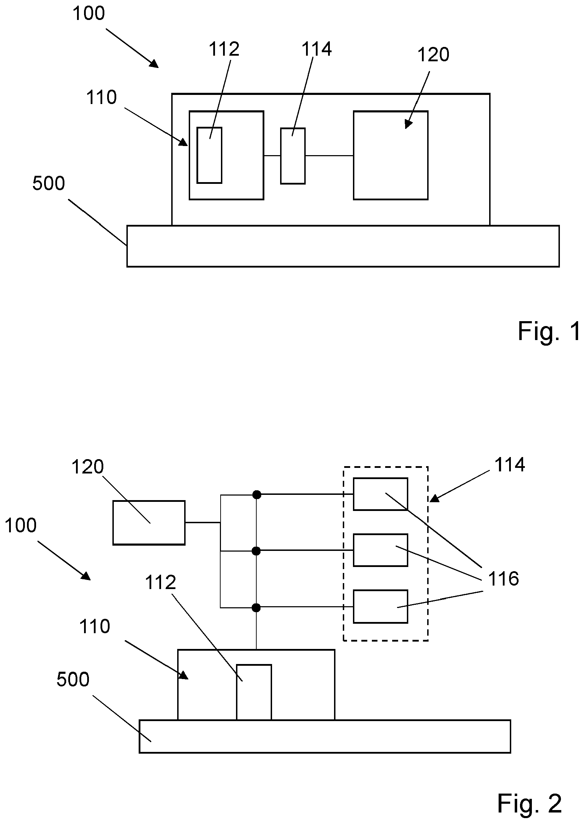

Referring to Figure 1, a vibration control system 100 is shown. The vibration control system 100 is for controlling vibration of a structure 500.

The vibration control system 100 comprises a resonator arrangement 110. The resonator arrangement 110 is for controlling vibration of the structure 500 by absorbing energy therefrom. The resonator arrangement 110 is tunable to tune one or more resonance frequencies of the resonator arrangement 110.

The vibration control system 100 comprises a controller 120. The controller 120 is configured to determine a frequency response of vibration of the structure 500. The controller 120 is configured to tune the one or more resonance frequencies of the resonator arrangement 110 based on the determined frequency response of vibration of the structure 500. That is, tuning of the resonator arrangement 110 is based on the determined frequency response of vibration of the structure 500.

The controller 120 is configured to control the vibration of the structure 500 by operating the tuned resonator arrangement 110.

Advantageously, in this way, specific frequencies of vibration of the structure can be targeted and controlled, without sweeping across a band of frequencies to provide control of structural vibrations. Furthermore, the present vibration control system 100 is easier and cheaper to implement using analogue circuitry when compared with a sweep approach. Despite the difference in approach, comparable performance (i.e., level of control of vibration of the structure) is achieved.

Further detail on the vibration control system 100 will be provided below.

In broad terms, the resonance frequency of the resonator arrangement 110 can be tuned using shunt impedance. By tuning the resonator arrangement 110 using shunt impedance in consideration of, or based on, the frequency response of vibration of the structure 500, targeted vibration control of vibrations of the structure 500 can be provided. In the present context, use of shunt circuits causes electrical current to be distributed between the shunt circuit and the resonator arrangement 110. In this way, the current provided to resonators of the resonator arrangement 110 can be altered, thereby to change (or "tune") the resonance frequency of the resonator arrangement 110. It will be well understood that the amount of electrical current distributed between the shunt circuit and the resonator arrangement 110 depends on the value of the shunt impedance of the shunt circuit. The value of the shunt impedance of the shunt circuit is a function of resistance, inductance, and capacitance of the shunt circuit (e.g., of components of the shunt circuit). It will be appreciated from the description herein that the resonance frequency of the resonator arrangement may correspond with a resonance frequency of one or more resonators of the resonator arrangement 110, or of the resonator arrangement 110 as a whole.

The vibration control system 100 may be provided in a metamaterial. The metamaterial maybe connectable or attachable to the structure 500, or otherwise cooperate with the structure 500 to control vibrations thereof.

The resonator arrangement 110 comprises one or more resonators 112. The resonators 112 may be of any suitable form, as will be understood by those skilled in the art. Exemplary and highly advantageous resonators 112 include electromechanical transducers. An example of an electromechanical transducer may be an electromechanical actuator. Electromechanical transducers or actuators may be operable to provide high levels of absorption of vibrational energy of the structure 500.

The vibration control system 100 further comprises a tuning arrangement in the form of a shunt circuit arrangement 114. The shunt circuit arrangement 114 comprises one or more shunt circuits 116. The shunt circuits 116 may be, or considered to be, part of the resonator arrangement 110. Alternatively, the shunt circuits 116 may be, or be considered to be, separate to the resonator arrangement 110. That is, the resonator arrangement 110 and shunt circuit arrangement 114 may be separate, or distinct, arrangements.

The shunt circuits 116 may be realised in analogue (i.e., an analogue shunt circuit) or in digital (i.e., a digital shunt circuit). The shunt circuit arrangement 114 may comprise one or more analogue shunt circuits and one or more digital shunt circuits - that is, a combination of one or more analogue shunt circuits and one or more digital shunt circuits.

The shunt circuit arrangement 114 may be provided in parallel to the resonator arrangement 110. In an example, each resonator 112 of the resonator arrangement 110 may be provided with one or more parallel shunt circuits 116.

In an analogue implementation of a shunt circuit 116, the shunt circuit 116 may be switchable between components thereby to vary the shunt impedance of the shunt circuit 116. In this way, a switchable shunt circuit 116 is realised. The adaptive tuning approach of the present invention facilitates the use of analogue shunt impedances, or analogue shunt circuits. Alternatively, a digital shunt circuit 116 may be implemented. In the context of the present invention, shunt circuits 116 enable control of multiple modes of vibration of the structure by tuning the resonance frequency of the resonator arrangement 110 to correspond with said modes of vibration.

As above, the controller 120 is configured to determine a frequency response of vibration of the structure 500. The controller 120 may predetermine the frequency response of vibration of the structure 500 (i.e., prior to operation of the vibration control system 100), or may be provided with the frequency response of the vibration of the structure 500 prior to operation of the vibration control system 100. Additionally, or alternatively, the controller 120 may receive input from a sensor 118 for providing information representative of vibration of the structure 500. The sensor 118 may be a vibration sensor. The sensor 118 may be in the form of an accelerometer or laser vibrometer. The controller 120 may determine the frequency response of vibration of the structure 500 using the input provided by the sensor 118.

The controller 120 tunes the one or more resonance frequencies of the resonator arrangement 110 based on the determined frequency response of vibration of the structure 500. This may involve determining specific frequencies of vibration of the structure 500, which may be a plurality of frequencies of maximum amplitude of vibration of the structure 500. This may be known as a "greatest magnitude" frequency selection approach. This involves a plurality of highest magnitude frequency bins, based on which the resonator arrangement 110 is tuned. Such an approach is highly advantageous, as the frequencies of greatest magnitude, and thus contributing considerably to the vibration of the structure 500, can be controlled. An exemplary algorithmic approach is as follows:
**Input:** rate of change of frequency of the structure; structural velocity measured at a single position
**Output:** shunt circuit component values (e.g., resistance (R), inductance (L), capacitance (C))
   1. Calculate frequency domain response using a logarithmically distributed fast Fourier transform of length non-uniform fast Fourier transform (samples).
   2. Sort frequency vector in descending order of frequency response magnitude.
   3. Truncate frequency vector to first N (corresponding to the N highest magnitudes).
   4. Calculate required R, L and C values to achieve selected tuning frequencies and damping ratio.
   5. Implement new component values.
   6. Hold for an update period of length n (samples).
   7. Repeat.

Examples of vibration control systems 100 within the scope of the present invention are illustrated in Figures 2 to 5.

Referring to Figure 2, a first example of the vibration control system 100 is shown. In this example, the resonator arrangement 110 comprises a single resonator 112, and the shunt circuit arrangement 114 comprises a plurality of shunt circuits 116. Each shunt circuit has a fixed shunt impedance. The controller 120 is configured to tune the one or more resonance frequencies of the resonator arrangement 110 by switching to, or between, the shunt circuits 116. The controller 120 is configured to control the frequency of vibration of the structure 500 by operating the tuned resonator arrangement 110.

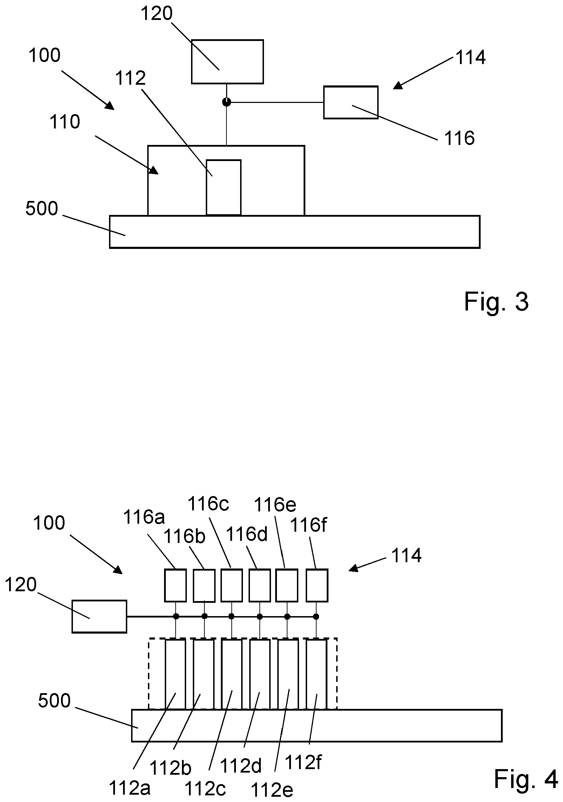

Referring to Figure 3, a second example of the vibration control system 100 is shown. In this example, the resonator arrangement 110 comprises a single resonator 112, and the shunt circuit arrangement 114 comprises a single shunt circuit 116. The shunt circuit 116 is a variable impedance shunt circuit. The controller 120 is configured to tune the one or more resonance frequencies of the resonator arrangement 110 by switching the shunt impedance of the shunt circuit 116. The controller 120 is configured to control the frequency of vibration of the structure 500 by operating the tuned resonator arrangement 110.

Referring to Figure 4, a third example of the vibration control system 100 is shown. In this example, the resonator arrangement 110 comprises a plurality of resonators 112a - 112f, and the shunt circuit arrangement 114 comprises a plurality of shunt circuits 116a - 116f. Each resonator 112 is connected in parallel with a corresponding shunt circuit 116. Each of the plurality of shunt circuits 116a - 116f is a variable impedance shunt circuit. The controller 120 is configured to tune the one or more resonance frequencies of the resonator arrangement 110 by switching the shunt impedance of each shunt circuit. Each resonator 112 of the resonator arrangement 110 may be operable, or operated, simultaneously, in turn and/or at different times based on the frequency it is desired to control. For example, a first resonator may be operated with an associated shunt circuit of a particular shunt impedance thereby to control a particular frequency response of vibration of the structure 500, and simultaneously, or subsequently, another resonator may be operated with an associated shunt circuit of a particular shunt impedance thereby to control (another) particular frequency response of vibration of the structure 500.

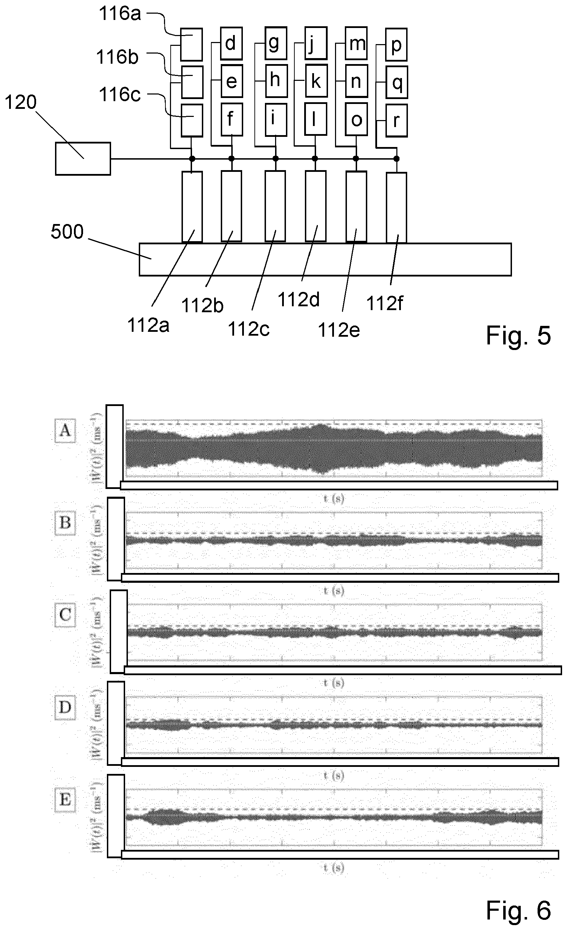

Referring to Figure 5, a fourth example of the vibration control system 100 is shown. In this example, the resonator arrangement 110 comprises a plurality of resonators 112a - 112f, and the shunt circuit arrangement 114 comprises a plurality of shunt circuits 116a - 116r. In this example, each resonator 112 is connected in parallel with a plurality of corresponding shunt circuits 116. In this example, the shunt circuits 116a - 116r are fixed impedance shunt circuits. The controller 120 is configured to tune the one or more resonance frequencies of the resonator arrangement 110 by switching to, or between, the shunt circuits 116. That is, the controller 120 may switch between the fixed shunt circuits 116 corresponding with a particular resonator 112. An example includes switching between shunt circuits 116a, 116b, 116c corresponding with resonator 112a, and so on for the other resonators 112b - 112f of the resonator arrangement 110. The controller 120 is configured to control the frequency of vibration of the structure 500 by operating the tuned resonator arrangement 110. Whilst in this example a plurality of fixed shunt circuits are illustrated, the person skilled in the art will appreciate that each resonator may be provided with a single switchable shunt circuit (as in Figure 4), where each shunt circuit is switchable between components thereby to vary the shunt impedance of the respective shunt circuit.

Further features of the present invention, relevant to all examples of the vibration control system 100, are described below.

In an example, the controller 120 is configured to determine the frequency response of vibration of the structure 500; tune the one or more resonance frequencies of the resonator arrangement 110 to a tuning corresponding to specific frequencies of vibration of the structure 500. The controller 120 may be configured to repeat the determination of the frequency response of vibration of the structure and tune (e.g., retune) the one or more resonance frequencies. In this way, the tuning may be updated.

In an example, the controller 120 may be configured to periodically update the tuning of the resonator arrangement 110. That is, after a suitable, or predetermined, time period, the controller 120 may update the tuning of the resonator arrangement 110. In this way, the tuning may be updated, which enables multiple peak modes of vibration to be controlled and considered. Moreover, in this way, the active vibration control system 100 is adaptive, as it can be retuned to control particular frequencies at a given point in time.

Velocity feedback may be used to adaptively weight the switching rate. That is, the resonator arrangement 110 may be tuned to control a specific frequency of vibration of the structure 500 based on the velocity of vibration of the structure 500. In this way, the resonator arrangement 110 may be tuned to a specific frequency based on the velocity of vibration of the structure 500 at that frequency. This enables an approach wherein the resonator arrangement 110 is tuned to large peaks in the velocity for a greater amount of time (thus providing improved control of large velocity peaks) and wherein the resonator arrangement 110 is tuned to frequencies with little to no velocity for a lesser amount of time (as these do not contribute substantially to the overall vibration response of the structure 500).

The specific frequencies of vibration of the structure (which may be those to which the resonator arrangement is tuned) may be frequencies of highest magnitude of vibration of the structure. Such frequencies may be known as "peak frequencies of vibration of the structure", or "peak modes of vibration of the structure".

In an example, the controller 120 is configured to distribute the resonance frequencies of the resonator arrangement 110 around one or more frequencies of highest magnitude of vibration of the structure 500. In other words, the controller 120 may be configured to distribute the resonance frequencies of the resonator arrangement 110 in a band around the peak frequencies of vibration of the structure 500. In this way, a specific frequency of vibration of the structure can be targeted, so as to absorb the energy thereof.

The resonator arrangement 110 may comprise one or more single degree of freedom electromechanical transducers, or actuators. Advantageously, a single degree of freedom actuator may absorb a single mode of vibration, which may improve robustness and/or simplify tuning of the resonator arrangement 110.

The resonator arrangement 110 may comprise one or more multiple degree of freedom electromechanical transducers, or actuators. Advantageously, a multiple degree of freedom actuator may absorb multiple modes of vibration, which may improve vibration control and/or provide a more flexible vibration control system 100.

Referring to Figure 6, attenuation in the kinetic energy achieved by the present adaptive tuning approach, compared with other approaches, are compared. Plot A shows velocity of vibration of the structure 500 without vibration control. Plot B shows velocity of vibration of the structure 500 using a fixed tuning approach to control vibrations. Plot C shows velocity of vibration of the structure 500 using the vibration control system 100 and adaptive tuning approach described herein. Plot D shows velocity of vibration of the structure 500 using a high resolution swept approach to control vibrations. Plot E shows velocity of vibration of the structure 500 using a low resolution swept approach to control vibrations. Peak velocity is indicated in dashed line. RMS velocity is indicated in dotted line. As will be appreciated from Figure 6, the vibration control system 100 provides good performance in control (e.g., attenuation) of vibration of the structure.

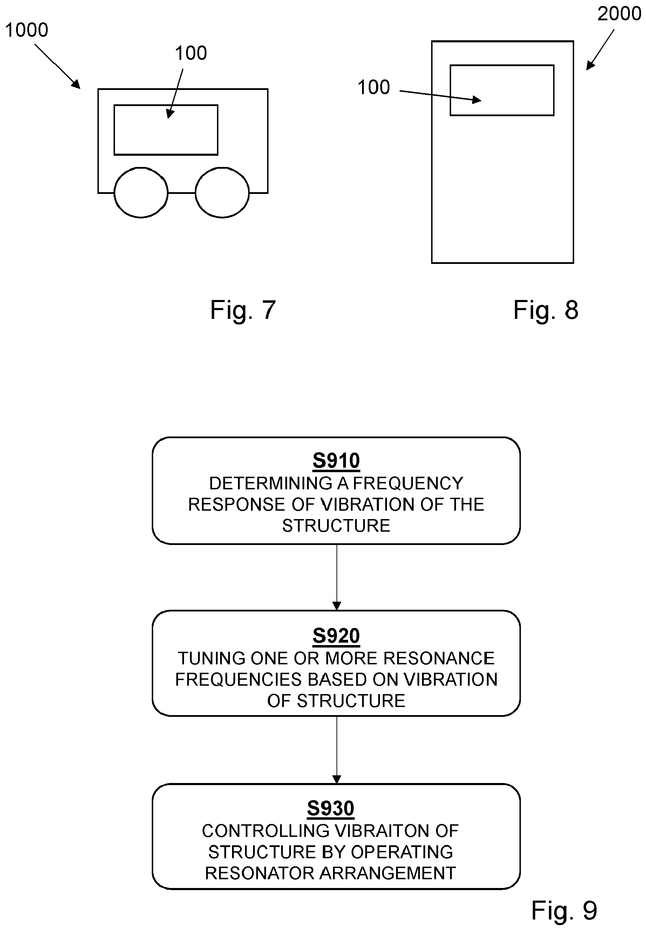

Referring to Figure 7, a vehicle 1000 is shown. The vehicle comprises a vibration control system 100. The vibration control system 100 is in accordance with that described herein, and may comprise any or all features of vibration control system 100 described above.

Referring to Figure 8, a structure 2000 is shown. The structure 2000 comprises a vibration control system 100. The vibration control system 100 is in accordance with that described herein, and may comprise any or all features of vibration control system 100 described above.

Referring to Figure 9, a method of controlling vibration of a structure is shown. The method uses a resonator arrangement for controlling vibration of the structure by absorbing energy therefrom. The resonator arrangement is tunable to tune one or more resonance frequencies of the resonator arrangement. Step S910 comprises determining a frequency response of vibration of the structure. Step S920 comprises tuning one or more resonance frequencies of the resonator arrangement based on the determined frequency response of vibration of the structure. Step 830 comprises controlling the vibration of the structure by operating the tuned resonator arrangement.

## Claims

1. A vibration control system for controlling vibration of a structure, the vibration control system comprising:
a resonator arrangement for controlling vibration of the structure by absorbing energy therefrom, the resonator arrangement being tunable to tune one or more resonance frequencies of the resonator arrangement; and
a controller configured to:
determine a frequency response of vibration of the structure;
tune the one or more resonance frequencies of the resonator arrangement based on the determined frequency response of vibration of the structure; and
control the vibration of the structure by operating the tuned resonator arrangement.

2. The vibration control system according to claim 1, wherein the resonator arrangement comprises one or more shunted electromechanical transducers.

3. The vibration control system according to claim 2, wherein shunt impedances are analogue.

4. The vibration control system according to any one of the preceding claims, wherein the controller is configured to:
determine the frequency response of vibration of the structure;
tune the one or more resonance frequencies of the resonator arrangement to a tuning corresponding to specific frequencies of vibration of the structure; and
repeat the preceding steps.

5. The vibration control system according to claim 4, wherein the controller is configured to:
periodically update the tuning of the resonator arrangement.

6. The vibration control system according to claim 4 or 5, wherein the specific frequencies of vibration of the structure are frequencies of highest magnitude of vibration of the structure.

7. The vibration control system according to claim 6, wherein the controller is configured to distribute the resonance frequencies of the resonator arrangement around one or more frequencies of highest magnitude of vibration of the structure.

8. The vibration control system according to any one of the preceding claims, wherein the resonator arrangement comprises one or more single degree of freedom actuators.

9. The vibration control system according to any one of the preceding claims, wherein the resonator arrangement comprises one or more multiple degree of freedom actuators.

10. The vibration control system according to any one of the preceding claims, wherein the resonator arrangement comprises one or more electromechanical actuators.

11. A vehicle or structure comprising the vibration control system according to any one of the preceding claims.

12. A method of controlling vibration of a structure using a resonator arrangement for controlling vibration of the structure by absorbing energy therefrom, the resonator arrangement being tunable to tune one or more resonance frequencies of the resonator arrangement, the method comprising:
determining a frequency response of vibration of the structure;
tuning one or more resonance frequencies of the resonator arrangement based on the determined frequency response of vibration of the structure; and
controlling the vibration of the structure by operating the tuned resonator arrangement.
